# EUROPÄISCHE PATENTSCHRIFT

(11) **EP 2 726 310 B1**
(45) Veröffentlichungstag und Bekanntmachung des Hinweises auf die Patenterteilung: **25.10.2017**
(21) Anmeldenummer: 12728250.7
(22) Anmeldetag: 15.06.2012
(51) Int. Cl.: B60K 1/04, B62K 11/02, B62K 11/10, B62K 19/30

(54) **FAHRZEUG MIT EINEM ALS TRAGENDE STRUKTURKOMPONENTE AUSGEBILDETEN GEHÄUSE EINES ELEKTRISCHEN ENERGIESPEICHERS**
VEHICLE COMPRISING A HOUSING OF AN ELECTRIC ENERGY STORE, SAID HOUSING BEING DESIGNED AS A SUPPORTING STRUCTURAL COMPONENT
VÉHICULE DOTÉ D'UN BOÎTIER D'ACCUMULATEUR D'ÉNERGIE ÉLECTRIQUE, QUI EST CONÇU COMME UN COMPOSANT STRUCTURAL PORTEUR

(30) Priorität: 29.06.2011 DE 102011078265
(43) Veröffentlichungstag der Anmeldung: 07.05.2014
(73) Patentinhaber: Bayerische Motoren Werke Aktiengesellschaft, 80809 München (DE)
(72) Erfinder: PLATZ, Christoph, 85716 Unterschleißheim (DE); ANNABERGER, Leonhard, 83670 Bad Heilbrunn (DE)
(86) Internationale Anmeldenummer: PCT/EP2012/061389
(87) Internationale Veröffentlichungsnummer: WO 2013/000731

(56) Entgegenhaltungen:
- EP-A1- 0 444 975
- WO-A1-00/43259
- JP-A- 2000 118 469
- US-A1- 2005 217 910

## Beschreibung

Die vorliegende Erfindung betrifft ein Fahrzeug gemäß den Merkmalen des Patentanspruches 1. Aus der gattungsbildenden EP 444 975 A1 ist ein Fahrzeug mit einem Vorderrad und einem Hinterrad und einer elektrischen Antriebsmaschine bekannt, welche zum Antreiben des Vorderrads vorgesehen ist. Ferner sind mehrere elektrische Speichereinheiten vorgesehen, die in einem Speichergehäuse untergebracht ist, das zwischen dem Vorderrad und dem Hinterrad des Fahrzeugs angeordnet ist. Zum technischen Hintergrund der vorliegenden Erfindung zählen ferner die JP 2000-118469 A, US 2005/217910 A1 sowie die WO 0043259 A1. Fahrzeughersteller setzen derzeit in verstärktem Maße auf Fahrzeuge mit Hybridantrieb oder reinem Elektroantrieb. Derartige Fahrzeuge benötigen eine relativ schwere Batterie. Die Batterie kann z. B. im Unterbodenbereich, im Bereich eines Fahrzeugzwischenbodens oder in einem "Kofferraum" des Fahrzeugs angeordnet sein. Aufgrund des hohen Gewichts der Batterie muss die Karosserie bzw. der Rahmen des Fahrzeugs in dem Bereich, in dem die Batterie untergebracht ist, entsprechend steif ausgeführt sein.
Aufgabe der Erfindung ist es, ein Fahrzeug zu schaffen, bei dem der elektrische Energiespeicher möglichst gut in die Karosserie bzw. in den Rahmen des Fahrzeugs integriert ist.
Ausgangspunkt der Erfindung ist ein elektrischer Energiespeicher, welcher aus mehreren Speichereinheiten bestehen kann. Der Begriff "Speichereinheit" umfasst insbesondere Batteriezellen, Kondensatoren oder andere Einrichtungen, die zum Speichern elektrischer Energie geeignet und bestimmt sind. Die einzelnen Speichereinheiten können parallel oder seriell miteinander verschaltet sein. Mehrere Speichereinheiten können zu einem Speichermodul miteinander verschaltet sein. Der elektrische Energiespeicher kann mehrere miteinander verschaltete Speichermodule aufweisen.

Die Speichereinheiten sind in einem "Speichergehäuse" untergebracht. Gemäß der Erfindung ist das Speichergehäuse so stabil ausgeführt, dass es als tragende Strukturkomponente einer Karosserie bzw. eines Rahmens eines Fahrzeugs fungieren kann.

Unter dem Begriff "Speichergehäuse" ist ein Gehäuse zu verstehen, in dem die Speichereinheiten des elektrischen Energiespeichers untergebracht sind. In Abgrenzung zu herkömmlichen Fahrzeugkonzepten, bei denen der elektrische Energiespeicher in einem "Kompartiment" der Fahrzeugkarosserie untergebracht ist, bildet das Speichergehäuse des erfindungsgemäßen elektrischen Energiespeichers eine tragende Komponente der Fahrzeugkarosserie bzw. des Fahrzeugrahmens. Das Speichergehäuse gemäß der Erfindung ist somit unerlässlicher Bestandteil der Fahrzeugkarosserie bzw. des Fahrzeugrahmens. Ließe man das Speichergehäuse gedanklich fort, so könnte man nicht mehr von einer "funktionsfähigen Fahrzeugkarosserie" bzw. einem "funktionsfähigen Fahrzeugrahmen" sprechen. Dementsprechend ist ein Austausch des elektrischen Energiespeichers bzw. des Speichergehäuses nur möglich, indem die Fahrzeugkarosserie bzw. der Fahrzeugrahmen zerlegt wird.

Die Erfindung zeichnet sich also vor allem dadurch aus, dass das Speichergehäuse unmittelbar als "Tragstrukturkomponente" verwendet wird und nicht bloß in ein Rahmen- oder Karosseriekompartiment eingesetzt oder daran angebaut ist, wie dies bei herkömmlichen Fahrzeugkonzepten der Fall ist. Mit der Erfindung lassen sich somit bei einer geringen Anzahl einzelner Komponenten Bauraum und Gewicht einsparen.

Die Erfindung ist insbesondere für Anwendungen bei Zweirädern bzw. Motorrädern oder Motorrollern (sogenannten Scootern) geeignet. Anwendbar ist die Erfindung aber auch bei dreirädrigen Fahrzeugen (so genannte "Trikes"), vier- oder mehrrädrigen Fahrzeugen (z. B. Pkw). Es kann vorgesehen sein, dass das Fahrzeug ausschließlich durch eine elektrische Maschine (Elektromotor) angetrieben wird, d. h. dass es sich um ein reines Elektrofahrzeug (ohne Verbrennungsmotor) handelt.
Gemäß der Erfindung sind sämtliche elektrische Speichereinrichtungen, in denen elektrische Energie, welche zum Erzeugen von Fahrzeugvortrieb verwendet wird, in dem einen (und einzigen im Fahrzeug vorgesehenen) Speichergehäuse untergebracht. Das Speichergehäuse ist eine eigenständige Komponente, an die die sich daran anschließenden Rahmen- oder Karosseriekomponenten "angebaut" sind. Erfindungsgemäß ist das Speichergehäuse wasserdicht, was den Vorteil hat, dass es ein Vordringen von Wasser aus der Umgebung zu den einzelnen Speichereinheiten verhindert.
Eine Steuerelektronik, welche das Laden und Entladen des durch die einzelnen elektrischen Speichereinheiten gebildeten elektrischen Speichers steuert bzw. regelt (Batteriemanagementsystem), kann ebenfalls in dem Speichergehäuse untergebracht sein oder außerhalb davon.
Das Speichergehäuse kann z. B. zwischen einer Vorderachse bzw. einem Vorderrad und einer Hinterachse bzw. einem Hinterrad des Fahrzeugs angeordnet sein. Das Vorderrad und/oder das Hinterrad können lenkbar angeordnet sein.
Da das Speichergehäuse eine tragende Komponente des Rahmens bzw. der Karosserie des Fahrzeugs bildet, stützt es aus der Masse des Fahrzeugs resultierende Kräfte und Biegemomente ab.
Nach einer Weiterbildung der Erfindung weist das Fahrzeug einen vorderen Rahmen-, Karosserie- und/oder Fahrwerksabschnitt auf, welcher mit dem Speichergehäuse verbunden ist. An dem vorderen Rahmen- oder Karosserieabschnitt kann z. B. eine ein Vorderrad tragende Vorderradaufhängung angeordnet sein.
Nach einer Weiterbildung der Erfindung weist der vordere Rahmen-, Karosserie- und/oder Fahrwerksabschnitt eine Lenkeraufnahme auf. Die Lenkeraufnahme kann z. B. durch ein Lenkkopfrohr gebildet sein, an dem eine Vorderradgabel oder ein Vorderradträger schwenkbar gelagert ist. Das Lenkkopfrohr kann in symmetrischer Weise, z. B. über vier Stützrohre, mit dem Speichergehäuse verbunden sein.
Das Speichergehäuse kann im Wesentlichen die Form eines Quaders haben, der sich in Fahrzeuglängsrichtung erstreckt. Im Falle eines Zweirads (z. B. Motorroller) kann das Speichergehäuse so gestaltet sein, dass seine in Fahrzeuglängsrichtung gemessene Länge größer ist als seine in Fahrzeugquerrichtung gemessene Breite. Je größer der Querschnitt des quaderförmigen Speichergehäuses ist, umso größer ist seine Biege- und Torsionssteifigkeit. Je höher (gemessen in einer Vertikalrichtung des Fahrzeugs) man das Speichergehäuse gestalten kann, umso größer ist seine Biegesteifigkeit. Mit einem derartigen "kastenartigen Speichergehäuse" lassen sich im Vergleich zu herkömmlichen Karosserie- oder Rahmenkonstruktionen sehr hohe Steifigkeiten erzielen, was sich sehr positiv auf das Fahrverhalten des Fahrzeugs auswirkt.
Das Speichergehäuse kann aus Metall, z. B. aus Aluminium oder einer Aluminiumlegierung hergestellt sein. Es umschließt sämtliche Speichereinheiten und schützt diese vor Beschädigungen, was insbesondere bei einem Unfall bzw. einer Kollision von großer Bedeutung ist. Erfindungsgemäß ist an dem Speichergehäuse eine das Hinterrad tragende Hinterradaufhängung angelenkt. Die Hinterradaufhängung ist schwenkbar mit dem Speichergehäuse verbunden. Sie ist als Hinterradschwinge ausgebildet, die über ein Schwenkgelenk mit dem Speichergehäuse (oder einem daran angebrachten Flansch) verbunden ist. Die Hinterradaufhängung ist über ein Federbein federnd gegenüber dem Speichergehäuse abgestützt. Zusätzlich dazu oder integriert in das Federbein kann eine Dämpfereinrichtung vorgesehen sein.
Im Folgenden wird die Erfindung im Zusammenhang mit der Zeichnung näher erläutert.

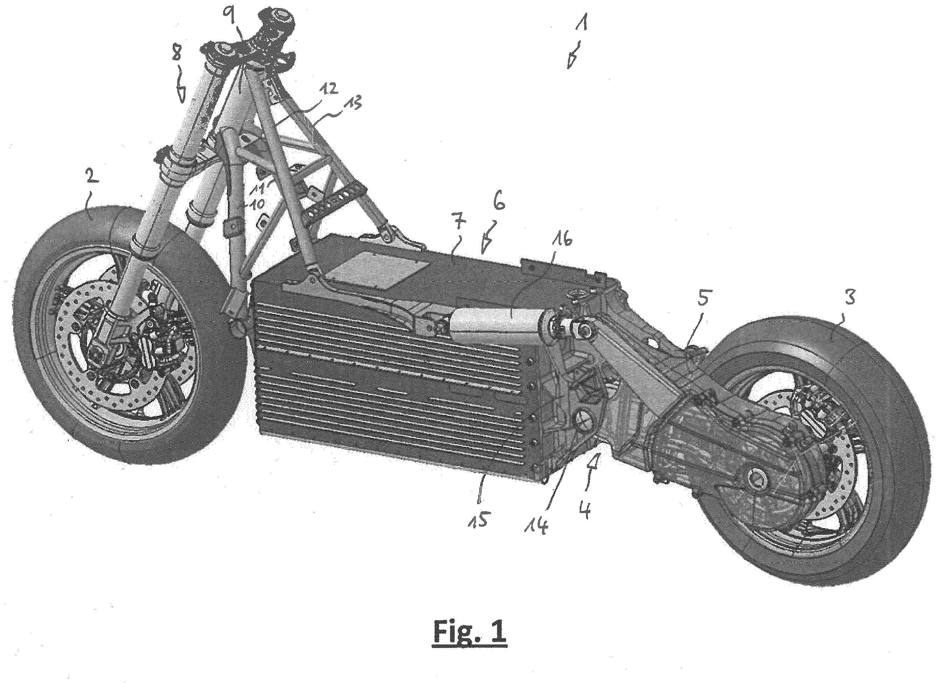

Figur 1 zeigt in schematischer Darstellung ein Fahrzeugkonzept für einen Elektroroller 1. Der Elektroroller 1 weist ein Vorderrad 2 und ein Hinterrad 3 auf. In einem Bereich 4 einer Hinterradschwinge 5 ist eine hier nicht näher dargestellte elektrische Maschine angeordnet. Die elektrische Maschine ist über eine Übersetzungseinrichtung, welche z. B. durch einen Riementrieb, einen Kettentrieb, einen Kardantrieb o. ä. gebildet sein kann, mit dem Hinterrad 3 drehgekoppelt. Die elektrische Maschine treibt das Hinterrad 3 des Elektrorollers 1 an.
Im Bereich zwischen dem Vorderrad 2 und dem Hinterrad 2 des Motorrollers 1 ist ein elektrischer Energiespeicher 6 angeordnet. Der elektrische Energiespeicher 6 kann z. B. durch eine Batterie- oder Kondensatoranordnung gebildet sein. Er weist ein Speichergehäuse 7 auf, in dem die den eigentlichen elektrischen Energiespeicher bildenden elektrischen Speichereinheiten untergebracht sind. Bei den Speichereinheiten kann es sich um einzelne Batteriezellen oder Kondensatoren handeln, die parallel oder in Reihe miteinander verschaltet sein können. Mehrere solcher Speichereinheiten können zu einem Speichermodul verschaltet sein. In dem Speichergehäuse 7 können wiederum mehrere derartige Speichermodule untergebracht sein.
Wie aus Figur 1 ersichtlich ist, bildet das Speichergehäuse 7 eine tragende Strukturkomponente eines Rahmens bzw. einer Karosserie des Motorrollers 1. Ein vorderer Karosserie- bzw. Rahmenabschnitt ist über das Speichergehäuse 7, welches einen für Motorroller bzw. "Scooter" charakteristischen, "durchstiegartigen mittleren Karosserie- bzw. Rahmenabschnitt" bildet, mit einem hinteren Fahrzeugabschnitt, der hier im Wesentlichen durch die Hinterradschwinge gebildet ist, verbunden. Der durchstiegartige Mittelabschnitt kann bei einem Motorroller als Plattform dienen, auf der der Fahrer seine Füße abstellt. Alternativ dazu können auf der linken und der rechten Seite des Mittelabschnitts (an den beiden Seitenwänden des Speichergehäuses 7) plattformartige Fußauflagen (nicht dargestellt) angebracht sein. Das Speichergehäuse 7 bildet somit ein ganz zentrales Karosserie- oder Rahmenmodul, an das vordere und hintere Fahrzeugkomponenten angebunden sind.

Das Vorderrad 2 des Motorrollers 1 ist drehbar an einer Vorderradgabel 8 gelagert. Die Vorderradgabel 8 ist schwenkbar an einem Lenkkopfrohr 9 gelagert. Das Lenkkopfrohr 9 ist symmetrisch bezüglich des elektrischen Energiespeichers 6 angeordnet. Das Lenkkopfrohr 9 ist hier über vier Stützrohre 10, 11 bzw. 12, 13 mit dem Speichergehäuse 7 verbunden.

Die Hinterradschwinge 5 ist über ein Schwenkgelenk 14 schwenkbar mit einem Flansch 15 verbunden, welcher wiederum fest mit dem Speichergehäuse 6 verbunden ist. Die Hinterradschwinge 5 ist ferner über ein Federbein 16 mit dem Speichergehäuse 6 verbunden. Das Federbein 16 ermöglicht ein Ein- bzw. Ausfedern der Hinterradschwinge in Bezug auf das Speichergehäuse 6. In das Federbein 16 kann ein Dämpfer integriert sein. Der Dämpfer (nicht dargestellt) könnte auch als separate Komponente ausgebildet sein.

Vergleicht man das in Figur 1 gezeigte Fahrzeugkonzept mit anderen, herkömmlichen Fahrzeugkonzepten von Elektrofahrzeugen, so fällt auf, dass ein vorderer Rahmen, Karosserie- bzw. Fahrwerksbereich, der bei dem hier gezeigten Ausführungsbeispiel im Wesentlichen durch die Vorderradgabel 8, das Lenkkopfrohr 9 und die Stützrohre 10 - 13 gebildet ist, mit einem hinteren Rahmen, Karosserie- bzw. Fahrwerksbereich, der hier im Wesentlichen durch die Hinterradschwinge 5 gebildet ist, ausschließlich durch das Speichergehäuse 7 verbunden ist. Das Speichergehäuse 7 ist somit unverzichtbarer Bestandteil des Rahmens des in Figur 1 gezeigten Motorrollers, an dem die diversen Fahrwerkskomponenten direkt oder indirekt befestigt sind.

Das Speichergehäuse 7 kann auch als "Batteriekasten" bezeichnet werden, der tragender Bestandteil des Elektrorollers 1 ist. Der Batteriekasten bildet einen "Hauptrahmen" des Fahrzeugs und weist Aufnahmen für den Frontrahmen, einen Heckrahmen (nicht dargestellt), die Hinterradschwinge 5 und den elektrischen Antriebsmotor auf.

## Patentansprüche

1. Fahrzeug (1) mit
- mindestens einem Vorderrad (2),
- mindestens einem Hinterrad (3),
- einer elektrischen Antriebsmaschine, welche zum Antreiben des mindestens eines Hinterrads (3) vorgesehen ist,
- mehreren elektrischen Speichereinheiten, die in einem Speichergehäuse (7) untergebracht sind, wobei das Speichergehäuse (7) eine tragende Komponente eines Rahmens oder einer Karosserie des Fahrzeugs (1) bildet, wobei
- mit dem Speichergehäuse (7) eine das mindestens eine Hinterrad (3) tragende Hinterradaufhängung (5) verbunden ist,
- die Hinterradaufhängung (5) schwenkbar an dem Speichergehäuse (7) angelenkt ist, wobei
• es sich bei dem Fahrzeug (1) um ein Motorrad oder einen Motorroller handelt,
• das Speichergehäuse (7) wasserdicht ist und ein Eindringen von Wasser in das Innere des Speichergehäuses (7) verhindert,
• die Hinterradaufhängung (9) als Hinterradschwinge ausgebildet ist,
und
die elektrische Antriebsmaschine im Bereich der Hinterradschwinge angeordnet ist,
**dadurch gekennzeichnet, dass**
die Hinterradschwinge über ein Schwenkgelenk (14) mit dem Speichergehäuse (7,15) verbunden ist und über ein Federbein (16) gegenüber dem Speichergehäuse (7) abgestützt ist,
und der Batteriekasten Aufnahmen für den elektrischen Antriebsmotor aufweist.

2. Fahrzeug nach Anspruch 1, **dadurch gekennzeichnet, dass** das Speichergehäuse (7) lösbar mit damit verbundenen Rahmen-, Karosserie- oder Fahrwerkskomponenten (5; 8 - 13; 16) verbunden ist.

3. Fahrzeug nach einem der Ansprüche 1 oder 2, **dadurch gekennzeichnet, dass** sämtliche zur Versorgung der elektrischen Antriebsmaschine vorgesehenen Speichereinheiten in dem Speichergehäuse (7) untergebracht sind.

4. Fahrzeug nach einem der Ansprüche 1 bis 3, **dadurch gekennzeichnet, dass** das Speichergehäuse zwischen dem mindestens einen Vorderrad (2) und dem mindestens einen Hinterrad (3) angeordnet ist und aus der Masse des Fahrzeugs (1) resultierende Kräfte, Biege- und Torsionsmomente abstützt.

5. Fahrzeug nach einem der Ansprüche 1 bis 4, **dadurch gekennzeichnet, dass** das Fahrzeug (1) einen vorderen Rahmen, Karosserie- oder Fahrwerksabschnitt (8-13) aufweist, welcher mit dem Speichergehäuse (7) verbunden ist, wobei an dem vorderen Rahmen-, Karosserie- oder Fahrwerksabschnitt eine das Vorderrad (2) tragende Vorderradaufhängung (8) angeordnet ist.

6. Fahrzeug nach Anspruch 6, **dadurch gekennzeichnet, dass** der vordere Rahmen-, Karosserie- oder Fahrwerksabschnitt (8 - 13) ein Lenkkopfrohr (9) aufweist, an dem eine Vorderradgabel (8) oder ein Vorderradträger schwenkbar gelagert ist.

7. Fahrzeug nach Anspruch 6, **dadurch gekennzeichnet, dass** das Lenkkopfrohr (9) über mehrere Stützrohre (10 - 13) mit dem Speichergehäuse (7) verbunden ist.

8. Fahrzeug nach einem der Ansprüche 1 bis 7, **dadurch gekennzeichnet, dass** der Motorroller (1) einen im Wesentlichen durch das Speichergehäuse (7) gebildeten durchstiegartigen Mittelabschnitt aufweist.

9. Fahrzeug nach einem der Ansprüche 1 bis 8, **dadurch gekennzeichnet, dass** es sich bei den Speichereinheiten um Batteriezellen oder Kondensatoren handelt.

## Claims

1. A vehicle (1) with
- at least one front wheel (2),
- at least one rear wheel (3),
- an electric drive machine which is provided for driving the at least one rear wheel (3),
- a plurality of electric storage units which are accommodated in a storage housing (7), wherein the storage housing (7) forms a load-bearing component of a frame or of a body of the vehicle (1), wherein
- a rear-wheel suspension (5) which bears the at least one rear wheel (3) is connected to the storage housing (7),
- the rear-wheel suspension (5) is articulated pivotably to the storage housing (7),
wherein
• the vehicle (1) is a motorcycle or a motor scooter,
• the storage housing (7) is watertight and prevents penetration of water into the interior of the storage housing (7),
• the rear-wheel suspension (9) is formed as a rear swing arm, and the electric drive machine is arranged in the region of the rear swing arm,
**characterised in that**
the rear swing arm is connected to the storage housing (7,15) via a swivel joint (14) and is supported relative to the storage housing (7) via a suspension strut (16), and the battery compartment has receptacles for the electric drive motor.

2. A vehicle according to Claim 1, **characterised in that** the storage housing (7) is connected releasably to frame, body or chassis components (5; 8 - 13; 16) which are connected thereto.

3. A vehicle according to one of Claims 1 or 2, **characterised in that** all the storage units provided for supplying the electric drive machine are accommodated in the storage housing (7).

4. A vehicle according to one of Claims 1 to 3, **characterised in that** the storage housing is arranged between the at least one front wheel (2) and the at least one rear wheel (3) and supports forces, bending and torsional moments resulting from the mass of the vehicle (1).

5. A vehicle according to one of Claims 1 to 4, **characterised in that** the vehicle (1) has a front frame, body or chassis portion (8 - 13) which is connected to the storage housing (7), with a front-wheel suspension (8) which bears the front wheel (2) being arranged on the front frame, body or chassis portion.

6. A vehicle according to Claim 6, **characterised in that** the front frame, body or chassis portion (8 - 13) has a steering head tube (9) on which a front fork (8) or a front-wheel carrier is pivotably mounted.

7. A vehicle according to Claim 6, **characterised in that** the steering head tube (9) is connected to the storage housing (7) via a plurality of supporting tubes (10 - 13).

8. A vehicle according to one of Claims 1 to 7, **characterised in that** the motor scooter (1) has a low-crossbar-like central portion formed substantially by the storage housing (7).

9. A vehicle according to one of Claims 1 to 8, **characterised in that** the storage units are battery cells or capacitors.

## Revendications

1. Véhicule (1) comportant au moins :
- une roue avant (2),
- une roue arrière (3),
- un moteur électrique pour entraîner au moins une roue arrière (3),
- plusieurs unités d'accumulateur électrique logées dans un boitier d'accumulateur (7), ce boîtier (7) formant un composant porteur du cadre ou de la carrosserie du véhicule (1),
- une suspension de roue arrière (5) portant au moins une roue arrière (3) étant reliée au boîtier d'accumulateur (7),
- la suspension de roue arrière (5) étant articulée de manière pivotante au boîtier d'accumulateur (7),
dans lequel
- le véhicule (1) est une moto ou un scooter,
- le boîtier d'accumulateur (7) est étanche à l'eau et évite la pénétration d'eau à l'intérieur du boîtier d'accumulateur (7),
- la suspension de roue arrière (9) est réalisée sous la forme d'un bras de roue arrière, et
- le moteur électrique est installé dans la région du bras de roue arrière,
véhicule **caractérisé en ce que**
- le bras de roue arrière est relié au boîtier d'accumulateur (7, 15) par une articulation pivotante (14) et s'appuie par une jambe à ressort (16) contre le boîtier d'accumulateur (7), et
- le boîtier de batterie comporte des moyens de fixation pour le moteur électrique.

2. Véhicule selon la revendication 1,
**caractérisé en ce que**
le boîtier d'accumulateur (7) est relié de manière amovible aux composants du cadre, de la carrosserie ou du châssis (5 ; 8 - 13 ; 16).

3. Véhicule selon l'une des revendications 1 ou 2,
**caractérisé en ce que**
toutes les unités d'accumulateur destinées à alimenter le moteur électrique sont logées dans le boîtier d'accumulateur (7).

4. Véhicule selon l'une des revendications 1 à 3,
**caractérisé en ce que**
le boîtier d'accumulateur se trouve entre au moins une roue avant (2) et au moins une roue arrière (3) et soutient les efforts, les couples de flexion et de torsion générés par la masse du véhicule (1).

5. Véhicule selon l'une des revendications 1 à 4,
**caractérisé en ce que**
le véhicule (1) comporte un cadre avant, un segment de carrosserie ou un châssis (8 - 13) reliés au boîtier d'accumulateur (7), et le segment de cadre avant, de carrosserie ou de châssis comportant une suspension de roue avant (8) portant la roue avant (2).

6. Véhicule selon la revendication 5,
**caractérisé en ce que**
le segment de cadre, de carrosserie ou de châssis avant (8 - 13) comporte un tube de direction (9) qui reçoit la fourche (8) de la roue avant ou le support de roue avant, par un montage pivotant.

7. Véhicule selon la revendication 6,
**caractérisé en ce que**
le tube de direction (9) est relié au boîtier d'accumulateur (7) par plusieurs tubes d'appui (10 - 13).

8. Véhicule selon l'une des revendications 1 à 7,
**caractérisé en ce que**
le scooter (1) a un segment médian traversant formé principalement par le boîtier d'accumulateur (7).

9. Véhicule selon l'une des revendications 1 à 8,
**caractérisé en ce que**
les unités d'accumulateur sont des cellules de batterie ou des condensateurs.
